(19) Europäisches Patentamt / European Patent Office / Office européen des brevets

(11) **EP 2 385 485 B1**

(12) **FASCICULE DE BREVET EUROPEEN**

(45) Date de publication et mention de la délivrance du brevet:
**30.10.2013 Bulletin 2013/44**

(51) Int Cl.:
***G06K 9/00*** *(2006.01)*    *G01J 5/34* *(2006.01)*

(21) Numéro de dépôt: **11165199.8**

(22) Date de dépôt: **06.05.2011**

(54) **Procédé de calibration d'une puce électronique et détecteur de motif thermique pour ce procédé**

VERFAHREN ZUM KALIBRIEREN EINES ELEKTRONISCHEN CHIPS UND ZUGEHÖRIGES DETEKTOR THERMISCHER MUSTER

METHOD OF CALIBRATING AN ELECTRONIC CHIP AND ADAPTED THERMAL PATTERN DETECTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.05.2010 FR 1053555**

(43) Date de publication de la demande:
**09.11.2011 Bulletin 2011/45**

(73) Titulaire: **Commissariat à l'Énergie Atomique et aux Énergies Alternatives 75015 Paris (FR)**

(72) Inventeurs:
• **Mainguet, Jean-François 38100, GRENOBLE (FR)**
• **Chambron, Alain 38120, SAINT-EGREVE (FR)**
• **Parat, Guy-Michel 38640, CLAIX (FR)**

(74) Mandataire: **Colombo, Michel et al Brevinnov 310 avenue Berthelot 69008 Lyon (FR)**

(56) Documents cités:
**EP-A1- 0 798 546     EP-A1- 1 857 797
WO-A1-99/26187     US-A1- 2006 115 128
US-B1- 7 385 381     US-B2- 7 194 113
US-B2- 7 519 205**

• **PETER BISHOP: 'Atmel's FingerChip(TM) Technology for Biometric Security', [en ligne] 01 Novembre 2002, pages 1 - 23, XP055042105 Extrait de l'Internet: <URL:http://www.biometrie-online.net/images /stories/dossiers/technique/ empreintes/Whit ePaper_FingerChip.pdf> [extrait le 2012-10-24]**

**Description**

L'invention concerne un procédé de calibration d'une puce électronique pour la détection d'un motif thermique ainsi qu'une puce électronique et un détecteur de motif thermique pour la mise en oeuvre de ce procédé.

Typiquement, une puce électronique est réalisée par un procédé de fabrication microélectronique, c'est- à-dire par dépôt de couches successives sur un substrat et par gravure de certaines de ces couches, par exemple, par photolithographie.

Ici, les puces électroniques concernées comportent des transducteurs thermiques capables de convertir une variation de température en une différence de potentiels.

Par exemple, de telles puces électroniques sont utilisées pour réaliser des détecteurs d'empreinte digitale.

Le déposant connait des procédés de calibration de ces puces comportant la mise en contact d'un transducteur normal de la puce à calibrer avec un premier élément ayant une première caractéristique thermique et la mesure d'une variation $\Delta T_1$ correspondante de température avec le transducteur normal.

Par caractéristiques thermiques d'un objet ou d'un élément, on désigne une caractéristique qui est fonction de la capacité thermique et/ou de la conductivité thermique de cet objet ou élément.

Ces procédés connus comportent également la mise en contact du même transducteur normal de la puce à calibrer avec un second élément ayant une seconde caractéristique thermique et la mesure d'une variation $\Delta T_2$ correspondante de température avec le même transducteur normal et le circuit de lecture de la puce à calibrer.

Par exemple, dans le cas d'un détecteur d'empreinte digitale, les variations de température $\Delta T_1$ et $\Delta T_2$ correspondent de préférence aux variations extrêmes qui peuvent être rencontrées lors d'une utilisation normale de la puce électronique. Ainsi, les variations $\Delta T_1$ et $\Delta T_2$ correspondent, respectivement, au cas où le transducteur normal est en contact avec l'air et au cas où il est directement en contact avec de l'eau. L'eau est un élément qui simule la meilleure conductivité thermique que peut avoir l'épiderme d'un doigt. En effet, les cellules de l'épiderme sont en très grande majorité constituées d'eau.

Par ailleurs, les valeurs mesurées pour les variations $\Delta T_1$ et $\Delta T_2$ varient d'une puce à l'autre même si ces puces électroniques sont identiques. Ici par « puces identiques », on désigne des puces qui ont été obtenues par le même procédé de fabrication. Il est donc nécessaire de renouveler les mesures des variations $\Delta T_1$ et $\Delta T_2$ sur chaque puce. Ceci est long et fastidieux.

De plus, puisque les valeurs des variations $\Delta T_1$ et $\Delta T_2$ sont spécifiques à chaque puce, ces valeurs sont enregistrées dans la puce elle-même. Ceci nécessite l'implémentation d'une mémoire non volatile dans la puce ce qui rend la réalisation de cette puce plus complexe et plus coûteuse.

De l'état de la technique est connu de :

- EP1857797A1,

- US7194113B2,

- US7519205B2,

- WO99/26187A1,

- EP0798546A1,

- US7385381 B1,

- Peter Bishop : « Atmet's FingerChip(TM) Technology for Biometric Security », 1 novembre 2002, pages 1-23, http://www.biometrie-online.net/images/stories/dossiers/technique/empreintes/WhitePaper FingerChip.pdf

- US2006/115128.

L'invention vise à remédier à au moins l'un de ces inconvénients. Elle a donc pour objet un procédé de calibration conforme à la revendication 1.

L'utilisation du transducteur de calibration permet de calibrer la puce électronique sans la mettre en contact avec le second élément. En effet, grâce au transducteur normal et au transducteur de calibration on dispose de deux variations différentes $\Delta T_1$ et $\Delta T_c$ comme si on avait successivement mis en contact la puce à calibrer avec deux éléments ayant des caractéristiques thermiques différentes. Toutefois, pour obtenir ces deux variations, il est uniquement nécessaire de mettre les transducteurs de la puce électronique en contact avec un seul de ces éléments. Le procédé de calibration est donc simplifié.

Les modes de réalisation de ce procédé peuvent comporter une ou plusieurs des caractéristiques des revendications dépendantes.

Ces modes de réalisation du procédé présentent en outre les avantages suivants :

- la détermination de la variation $\Delta T_2$ à partir des variations mesurées $\Delta T_1$ et $\Delta T_c$ et de la relation prédéterminée permet de déterminer la variation $\Delta T_2$ sans mettre en contact la seconde puce à calibrer avec le second élément;
- la mesure des variations $\Delta T_{1réf}$, $\Delta T_{2réf}$ et $\Delta T_{cref}$ permet de déterminer la relation prédéterminée entre les variations $\Delta T_1$, $\Delta T_c$ et $\Delta T_2$ pour toutes les puces à partir des mesures réalisées sur une seule puce;
- l'exécution de la calibration après chaque mise sous tension de la puce et avant son utilisation évite d'avoir recours à une mémoire non-volatile dans la puce;
- chauffer l'élément en contact avec le transducteur permet de mesurer une variation de température même lorsque le transducteur et l'élément sont initialement à la même température.

Enfin, l'invention a également pour objet un détecteur de motif thermique conforme à la revendication 8.

Les modes de réalisation de ce détecteur peuvent comporter les caractéristiques des revendications dépendantes.

L'invention sera mieux comprise à la lecture de la description qui va suivre, donnée uniquement à titre d'exemple non limitatif et faite en se référant aux dessins sur lesquels :

- la figure 1 est une illustration schématique d'un détecteur de motif thermique,
- la figure 2 est une illustration schématique et partielle de la répartition de pixels du détecteur de la figure 1 sur une face sensible,
- la figure 3 est un graphe illustrant la variation de température mesurée par un transducteur du détecteur de la figure 1 dans deux situations différentes,
- la figure 4 est une illustration schématique en coupe transversale de la structure d'un transducteur normal du détecteur de la figure 1,
- la figure 5 est une illustration schématique et en vue de dessus de la structure d'une électrode inférieure du transducteur de la figure 4,
- la figure 6 est une illustration schématique et en coupe verticale d'un transducteur de calibration du détecteur de la figure 1,
- la figure 7 est une illustration schématique d'un circuit de lecture des transducteurs du détecteur de la figure 1,
- la figure 8 est un organigramme d'un procédé de fabrication des transducteurs du détecteur de la figure 1,
- la figure 9 est un organigramme d'un procédé de calibration des transducteurs de la figure 1,
- la figure 10 est un graphe illustrant les mesures réalisées lors de la mise en oeuvre du procédé de la figure 9, et
- la figure 11 est un organigramme d'un procédé de fonctionnement du détecteur de la figure 1.

Dans ces figures, les mêmes références sont utilisées pour désigner les mêmes éléments.

Dans la suite de cette description, les caractéristiques et fonctions bien connues de l'homme du métier ne sont pas décrites en détail.

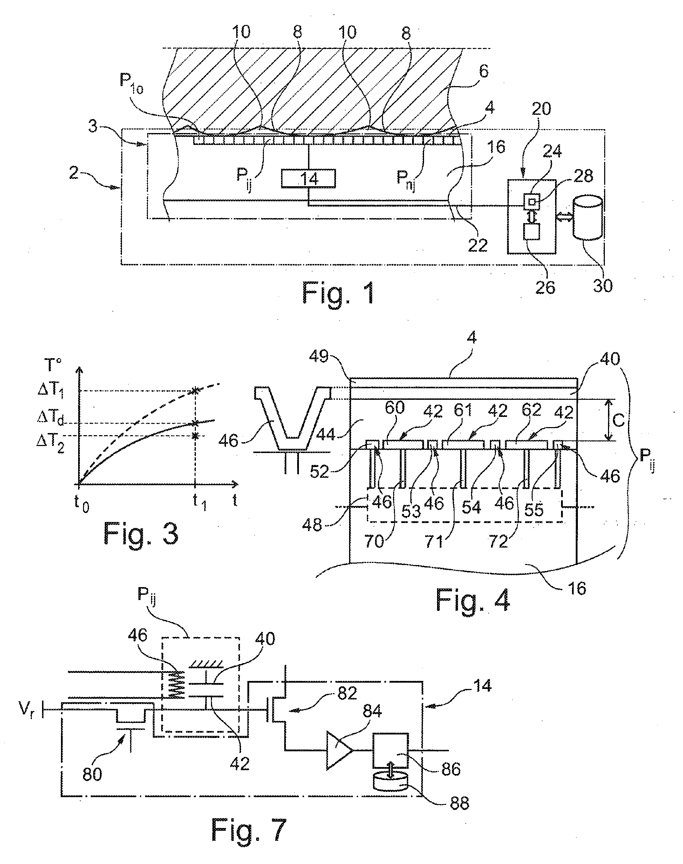

La figure 1 représente un détecteur 2 d'un motif thermique.

Un motif thermique est une répartition spatiale non homogène des caractéristiques thermiques d'un objet décelable à partir d'une puce électronique 3 du détecteur 2. Un tel motif thermique est généralement porté par un objet. Dans ce mode de réalisation, une empreinte digitale est un motif thermique détectable à partir du détecteur 2.

Par caractéristique thermique, on désigne les propriétés d'un objet qui sont fonctions de sa capacité thermique et de sa conductivité thermique.

Dans la suite de cette description, le détecteur 2 est décrit dans le cas particulier où celui-ci est spécialement adapté à la détection d'une empreinte digitale. Dans ce cas particulier, le détecteur 2 est plus connu sous le terme de détecteur d'empreinte digitale.

La puce 3 présente une face sensible 4 sur laquelle doit être appliqué l'objet incorporant le motif thermique à relever. Ici, cet objet est un doigt 6 dont l'épiderme est directement en appui sur la face 4. L'empreinte digitale présente sur l'épiderme du doigt 6 se traduit par la présence de crêtes 8 séparées par des creux 10. Sur la figure 1, le doigt 6 est grossi plusieurs fois pour rendre visible les crêtes 8 et les creux 10.

Lorsque le doigt 6 est en appui sur la face 4, seules les crêtes 8 sont directement en contact avec la face 4. Au contraire, les creux 10 sont isolés de la face 4 par de l'air. Ainsi, la conductivité thermique entre le doigt et la face 4 est meilleure au niveau des crêtes 8 qu'au niveau des creux 10. Une empreinte digitale correspond donc à un motif thermique susceptible d'être relevé par la puce 3.

A cet effet, la puce 3 comprend une multitude de pixels $P_{ij}$ de détection disposés immédiatement les uns à côté des autres sur toute la face 4. Un pixel $P_{ij}$ de détection est la plus petite surface autonome capable de détecter une variation de température. Les variations de température détectées varient d'un pixel à l'autre selon que celui-ci est en contact avec une crête 8 ou en vis-à-vis d'un creux 10.

Ces pixels $P_{ij}$ sont réalisés sur un même substrat 16.

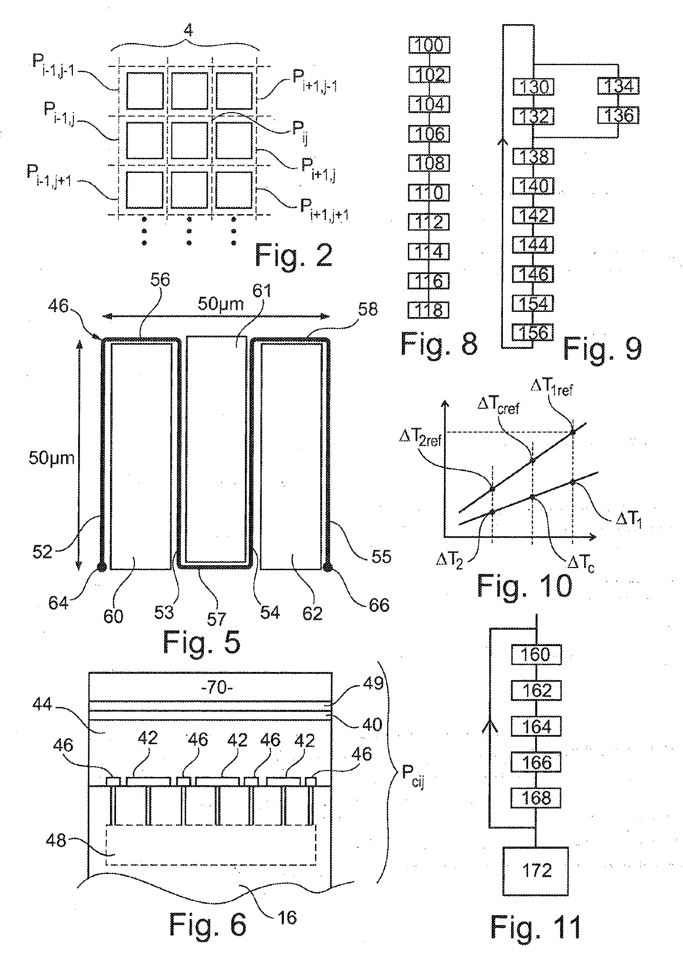

Un exemple de répartition des pixels $P_{ij}$ les uns à côté de autres est représenté sur la figure 2. Dans cet exemple, les pixels $P_{ij}$ sont répartis en lignes et en colonnes pour former une matrice de pixels. Par exemple, la puce 3 comprend au moins deux ou cinq lignes d'au moins 100 ou 150 pixels chacune.

Chaque pixel définit une fraction de la face 4. Ici, ces fractions de la face 4 sont rectangulaires et délimitées par des lignes en pointillée sur la figure 2. La surface de chaque fraction est inférieure à 1 mm$^2$ et, de préférence, inférieure à 0,5 ou 0,01 ou 0,005 mm$^2$. Ici, la fraction de la face 4 définie par chaque pixel $P_{ij}$ est un carré de 50 $\mu$m de côté. La distance entre le centre géométrique de deux pixels contigus est inférieure à 1 mm et, de préférence, inférieure à 0,5 ou 0,1 ou 0,01 ou 0,001 mm. Ici, la distance entre les centres des pixels $P_{ij}$ contigus est égale à 50 $\mu$m.

Chaque pixel comprend :

- un transducteur capable de transformer une variation de température en une différence de potentiels, et
- une résistance chauffante capable de chauffer l'objet en contact avec ce transducteur.

La différence de potentiels représente « la mesure » de la variation de température dans le sens où, après calibration, cette différence de potentiels peut être directement convertie en une variation de température.

Cette résistance chauffante permet de mettre en oeuvre un procédé actif de détection comme celui décrit dans la demande de brevet US 6 091 837. Le principe de fonctionnement de ce procédé actif de détection est rappelé en regard de la figure 3. Sur la figure 3, la ligne en trait continu représente l'évolution de la température d'un transducteur directement en contact avec une crête 8 du doigt 6. La courbe en pointillée représente quant à elle l'évolution de la température d'un transducteur en vis-à-vis d'un creux 10. Lorsque le transducteur est directement en contact avec la crête 8, la température dissipée par la résistance chauffante de ce pixel se traduit par une élévation moins rapide de la température étant donné qu'une partie de cette chaleur est directement transmise au doigt 6. A l'inverse, lorsqu'un transducteur est en face d'un creux 10, la conductivité thermique entre ce transducteur et le doigt 6 est plus faible et la chaleur produite par la résistance du pixel conduit à une augmentation plus rapide de la température de ce pixel. Ainsi, lorsque la variation de température entre les instants $t_0$ et $t_1$ est relevée par les transducteurs, ceux directement en contact avec une crête 8 relève une variation $\Delta T_d$ de température plus faible que la variation $\Delta T_1$ relevée par les pixels en face des creux 10. Cette différence de variation de température permet de détecter la présence d'un creux ou d'une crête à un emplacement particulier sur la face 4.

Les procédés actifs de détection présentent plusieurs avantages dont notamment le fait de pouvoir fonctionner même si la température initiale des pixels est proche ou identique de celle de l'objet portant le motif thermique. Il est également possible d'ajuster le contraste en contrôlant la quantité de chaleur dissipée par la résistance de chauffage de chaque pixel.

Chaque pixel $P_{ij}$ est électriquement raccordé à un circuit 14 de lecture des mesures de variation de température réalisées par chacun de ces pixels. Plus précisément, le circuit 14 est apte :

- à sélectionner un ou plusieurs pixels $P_{ij}$ à lire,
- à commander la résistance chauffante du ou des pixels sélectionnés, et
- à lire la variation de température mesurée par le transducteur du ou des pixels sélectionnés.

Typiquement, le circuit de lecture est gravé et/ou déposé dans le même substrat 16 rigide que celui sur lequel sont réalisés les pixels $P_{ij}$. Par exemple, le substrat 16 est en silicium ou en verre.

Le détecteur 2 comprend également un calculateur électronique 20 raccordé par une liaison filaire 22 à la puce 3. Par exemple, ce calculateur 20 est équipé d'un module 24 de pilotage de la puce 3 et d'un module 26 de traitement.

Le module 24 permet de relever le motif thermique à partir des mesures des pixels de détection. Plus précisément, ce module est capable de construire une carte des crêtes et des creux détectés par les différents pixels en fonction des mesures des pixels et de la position connue de ces pixels les uns par rapport aux autres.

Ce module 24 est ici également équipé d'un sous-module 28 de calibration de la puce 3 dont le fonctionnement est décrit en regard du procédé de la figure 9.

Ici, le module 26 est capable de comparer le motif thermique relevé à une base de données préenregistrées de motifs thermiques pour identifier un motif thermique particulier et, en réponse, autoriser ou au contraire interdire certaines actions comme par exemple l'accès à un bâtiment.

Alternativement ou en complément, le module 26 est également capable d'afficher le motif thermique relevé sur un écran. Cela permet par exemple de grossir le motif thermique relevé.

Typiquement, le calculateur 20 est réalisé à partir d'au moins un calculateur électronique programmable capable d'exécuter des instructions enregistrées sur un support d'enregistrement d'informations. A cet effet, le calculateur 20 est raccordé à une mémoire 30 contenant des instructions et les données nécessaires pour l'exécution les procédés des figures 9 et 11. En particulier, la mémoire 30 contient des valeurs $\Delta T_{1réf}$, $\Delta T_{2réf}$ et $\Delta T_{créf}$ nécessaires pour la calibration de la puce 3. Ces valeurs sont décrites plus loin en regard de la figure 9.

La puce 3 comprend deux types de pixels $P_{ij}$ : des pixels « normaux », notés $P_{nij}$, et des pixels de calibration notés $P_{cij}$. Les pixels $P_{nij}$ sont qualifiés de « normaux » car il constitue la majorité des pixels (par exemple plus de 90% des pixels $P_{ij}$) de la puce 3. Ils sont tous identiques les uns aux autres. Par « identique », on désigne le fait qu'ils présentent les mêmes caractéristiques thermiques et qu'ils sont tous obtenus par le même procédé de fabrication. La figure 4 représente un exemple particulier de réalisation d'un pixel normal $P_{nij}$ de la puce 3.

Le pixel $P_{nij}$ comprend une électrode supérieure 40 et une électrode inférieure 42 entre lesquelles est interposée une couche 44 en matériau pyroélectrique.

Ici, l'électrode 40 est commune à l'ensemble des pixels de la puce 3. Cette électrode 40 est raccordée à la masse par l'intermédiaire d'un plot de masse 46. L'électrode 40 est celle qui se retrouve interposée entre le doigt 6 et la couche 44 lorsque ce doigt est appliqué sur la face 4. Elle est donc réalisée de manière à conduire efficacement et rapidement la chaleur vers la couche 44. Ici, elle est réalisée dans un matériau bon conducteur thermique, c'est-à-dire ayant une conductivité thermique supérieure à 10 W.m$^{-1}$.K$^{-1}$. Elle présente également une faible épaisseur c'est-à-dire une épaisseur inférieure à 100 $\mu$m et, de préférence, inférieure à 1 $\mu$m. Ici, cette électrode supérieure est réalisée en molybdène (Mo).

Dans ce mode de réalisation, la couche 44 est réalisée en nitrure d'aluminium. Ici, par « réalisé en » on désigne une couche qui est réalisée presque exclusivement dans le même matériau. Ainsi, le nitrure d'aluminium représente plus de 90% et, de préférence, plus de 95% en masse de la couche 44. La couche 44 est également commune à l'ensemble des pixels de la puce 3. L'épaisseur de la couche 44 est supérieure à 0,5 ou 0,6 $\mu$m et avantageusement supérieure à 1 $\mu$m. En effet, plus l'épaisseur de la couche est importante, plus les charges générées dans le matériau seront importantes. Ici, son épaisseur est de l'ordre de 2 à 3 $\mu$m. Cette couche convertit une variation de température en une différence de potentiels entre les électrodes 40 et 42.

L'électrode inférieure 42 est spécifique à chaque pixel et électriquement isolée des électrodes inférieures des autres pixels. Elle permet de relever la différence de potentiels générée par la couche 44 au niveau du pixel $P_{ij}$. Par exemple, cette électrode inférieure est réalisée en molybdène et son épaisseur est de 50 nm.

Le pixel $P_{nij}$ comprend également une résistance chauffante 46 formée dans la même couche que celle utilisée pour former l'électrode 42. Cette résistance chauffante permet de chauffer la couche 44 pour mettre en oeuvre le procédé actif de détection.

L'électrode 42 et la résistance 46 sont raccordées au circuit 14 par l'intermédiaire de pistes conductrices 48 symbolisées par un rectangle en pointillé.

Le pixel $P_{nij}$ comporte également une couche protectrice 49 déposée sur l'électrode supérieure 40 de manière à la protéger encore plus contre l'abrasion et les attaques chimiques ainsi que contre l'oxydation. Cette couche protectrice est réalisée dans un matériau bon conducteur thermique. Elle présente également une faible épaisseur. Par exemple, l'épaisseur de la couche 49 est strictement inférieure à 100 $\mu$m et, de préférence, inférieure à 10 $\mu$m. Par exemple, la couche protectrice est une couche de nitrure d'aluminium (AlN) de quelques micromètres d'épaisseur.

La figure 5 représente un agencement particulier de la résistance 46 pour que celle-ci présente une résistance supérieure à 1 k$\Omega$ tout en occupant moins de 15 % de la surface du pixel $P_{nij}$. Ici, la résistance 46 est réalisée en molybdène étant donné que celle-ci est obtenue par gravure de la même couche que celle utilisée pour réaliser l'électrode inférieure 42. La résistance 46 est une bande résistive conformée en méandre. Plus précisément, la bande résistive est composée de plusieurs brins primaires 52 à 55 qui s'étendent parallèlement les uns aux autres. Ces brins sont raccordés en série. Pour cela, les extrémités des brins 52 à 55 sont raccordés les unes aux autres par des brins secondaires 56 à 58 qui s'étendent perpendiculairement aux brins primaires. Ici, la résistance 46 découpe l'électrode inférieure 42 en trois plaques rectangulaires identiques 60 à 62. Chaque plaque 60 à 62 fait par exemple 49 $\mu$m de long sur 15 $\mu$m de large. La bande résistive est espacée de 0,5 $\mu$m des différentes plaques 60 à 62 de manière à être électriquement isolée de ces plaques. La largeur de la bande résistive est de 0,5 $\mu$m et sa longueur totale est de 250 $\mu$m. Etant donné que l'épaisseur de la bande résistive est la même que celle de l'électrode inférieure c'est-à-dire 50 nm, la résistance de cette bande résistive entre ses deux extrémités 64 et 66 est d'environ 1 k$\Omega$ lorsqu'elle est réalisée en molybdène ayant une résistance de 10 $\mu\Omega$.cm. Avec une telle conformation, la résistance 46 occupe moins de 12 % de la surface du pixel $P_{nij}$.

Les plaques 60 à 62 sont court-circuitées entre elles par l'intermédiaire de plots verticaux 70 à 72 (figure 4).

Les extrémités 64 et 66 de la résistance 46 sont également raccordées par l'intermédiaire de plots verticaux aux pistes 48.

De manière à faciliter la calibration de la puce 3, celle-ci comporte également au moins un pixel de calibration $P_{cij}$ dont les caractéristiques thermiques sont différentes des pixels normaux $P_{nij}$.

La figure 6 représente un exemple de réalisation d'un tel pixel $P_{cij}$. Le pixel $P_{cij}$ est identique au pixel $P_{nij}$ à l'exception du fait qu'au-dessus de la couche protectrice 49, une couche supplémentaire 70 a été déposée. A cause de cette couche 70, la capacité thermique et/ou la conductivité thermique du pixel $P_{cij}$ sont différentes de celles du pixel

$P_{nij}$. Ainsi, dans les mêmes conditions, la variation de température mesurée à l'instant $t_1$ après que la résistance chauffante 46 ait été alimentée est différente de celle mesurée par les pixels $P_{ij}$.

La figure 7 représente un exemple de réalisation du circuit 14 de lecture. Sur cette figure, un pixel $P_{ij}$ à lire est symboliquement représenté sous la forme d'un condensateur dont l'électrode 40 est raccordée à la masse et l'électrode 42 est raccordée au circuit 14.

Le circuit 14 comprend un jeu de transistors de réinitialisation du potentiel de l'électrode 42 de l'un quelconque des pixels de la puce 3. Pour simplifier la figure 7, seul un transistor 80 de ce jeu est représenté. Ce transistor raccorde électriquement l'électrode 42 à un potentiel initial $V_r$ lorsque celui-ci est passant et, en alternance, laisse le potentiel de l'électrode 42 flotter lorsque ce transistor 80 est non-passant. Lorsque le potentiel de l'électrode 42 est flottant, la différence de potentiels $\Delta V_p$ entre les électrodes 40 et 42 est fonction de la variation $\Delta T$ de température. Par exemple, la relation entre la différence de potentiels $\Delta V_p$ et la variation $\Delta T$ de température est modélisée par la relation suivante : $\Delta V_p = \gamma \, e \, \Delta T / \varepsilon_0 \varepsilon_r$, où :

- e est l'épaisseur de la couche 44
- $\gamma$ est le coefficient pyroélectrique du matériau utilisé pour réaliser la couche 44,
- $\varepsilon_0$ et $\varepsilon_r$ sont, respectivement, la permittivité absolue du vide et la permittivité relative du matériau pyroélectrique.

Le circuit 14 comprend également un jeu de transistors permettant de sélectionner l'un quelconque des pixels $P_{ij}$ particulier de la puce 3 lorsque celui-ci est passant. Pour simplifier la figure 7, seul un transistor 82 de ce jeu a été représenté. Lorsque le transistor 82 est passant, il raccorde électriquement l'électrode 42 à un amplificateur 84 de la différence de potentiels $\Delta V_p$ du pixel sélectionné.

Le circuit 14 comprend également un convertisseur 86 analogique-numérique apte à échantillonner le signal analogique amplifié en sortie de l'amplificateur 84 pour le transmettre au calculateur 20. Ce convertisseur 86 est raccordé à une mémoire volatile 88 contenant des bornes $B_{min}$ et $B_{max}$ définissant la plage de tension à échantillonner par le convertisseur 86.

De manière à obtenir la sensibilité maximale, idéalement, la borne $B_{min}$ doit correspondre à la variation $\Delta T_d$ de température obtenue quand le pixel $P_{nij}$ est directement en contact avec la crête 8 ayant la meilleure conductivité thermique possible. De façon similaire, idéalement, la borne $B_{max}$ doit correspondre à la variation $\Delta T_1$ de température mesurée par le pixel $P_{nij}$ lorsque celui-ci est uniquement en contact avec de l'air.

Ces bornes $B_{min}$ et $B_{max}$ dépendent des caractéristiques thermiques du pixel $P_{nij}$ mais surtout des caractéristiques électriques des différents composants électroniques du circuit 14. En effet, les dimensions caractéristiques du pixel sont très nettement supérieures au micromètre et de l'ordre de plus d'une dizaine de micromètres. Par conséquent, une légère imprécision de moins d'un micromètre lors de la fabrication de ce transducteur a peu d'influence sur les caractéristiques thermiques du pixel. La répétabilité et la reproductibilité des caractéristiques thermiques des pixels est bonne.

A l'inverse, les composants électroniques du circuit 14 tels que les transistors 80 et 82 ont des dimensions caractéristiques très nettement inférieures au micromètre. Ainsi, la même imprécision de moins d'un micromètre lors de la fabrication de l'un de ces composants entraine un fonctionnement très différent. Par conséquent, la répétabilité et la reproductibilité des caractéristiques électriques du circuit 14 est beaucoup plus mauvaise. Ainsi, on peut considérer que les caractéristiques thermiques des pixels d'une puce à une autre sont sensiblement constantes si le même procédé de fabrication est utilisé. Par contre, les caractéristiques électriques présentent une variabilité beaucoup plus grande d'une puce à une autre même si le même procédé de fabrication est utilisé.

Le procédé collectif de fabrication de la puce 3 va maintenant être décrit plus en détail en regard de la figure 8. Ce procédé est « collectif » dans le sens où plusieurs puces sont simultanément fabriquées sur le même substrat.

Initialement, lors d'une étape 100, les circuits 14 et les différentes pistes 48 des différentes puces à fabriquer sont gravés sur le même substrat 16.

Ensuite, lors d'une étape 102, les plots verticaux tels que les plots 70 à 72 pour raccorder les électrodes inférieures et les extrémités 64 et 66 des résistances chauffantes aux pistes 48 sont réalisés.

Puis, lors d'une étape 104, une couche en molybdène est uniformément déposée sur l'ensemble du substrat pour venir en contact électrique avec les différents plots verticaux précédemment réalisés.

Lors d'une étape 106, cette couche en molybdène est gravée, par exemple par photolithographie, pour former en une seule et même opération les différentes électrodes inférieures de chaque transducteur de chaque puce et, en même temps, la résistance 46 de chacun des pixels des différentes puces.

Ensuite, lors d'une étape 108, la couche 44 de nitrure d'aluminium est déposée sur l'ensemble du substrat de manière à former en une seule opération la couche en matériau pyroélectrique de chacun des transducteurs de chacune des puces.

Lors d'une étape 110, cette couche en nitrure d'aluminium est gravée, par exemple par photolithographie, pour former les plots 46 de raccordement de l'électrode supérieure à la masse.

Lors d'une étape 112, une couche en molybdène est déposée sur l'ensemble du substrat pour former l'électrode supérieure commune à l'ensemble des transducteurs de chaque puce.

Lors d'une étape 114, l'électrode supérieure est oxydée sur une profondeur prédéterminée de manière à obtenir la couleur souhaitée. La couleur obtenue dépend de la profondeur d'oxydation. Cette oxydation peut être réalisée uniformément sur l'ensemble de la face supérieure de l'électrode supérieure ou, sélectivement, sur quelques parties uniquement de cette face supérieure de manière, par exemple, à dessiner un logo.

Ici, l'électrode supérieure n'est oxydée que sur une fraction de son épaisseur pour conserver au maximum les propriétés thermiques et électriques du molybdène.

Ensuite, lors d'une étape 116, la couche protectrice 49 est déposée sur l'ensemble du substrat.

La couche supplémentaire 70 des pixels $P_{cij}$ est également réalisée lors de l'étape 116. Par exemple, une surépaisseur du même matériau que celui utilisé pour la couche 49 est uniquement réalisée au-dessus des pixels $P_{cij}$.

Enfin, lors d'une étape 118, le substrat est découpé de manière à séparer mécaniquement les unes des autres les différentes puces électroniques réalisées sur ce substrat.

Une fois réalisée, la puce électronique est implémentée dans un détecteur de motif thermique tel que le détecteur 2. Toutefois, avant qu'elle puisse être utilisée, de manière à maximiser sa sensibilité, cette puce est calibrée.

Un procédé de calibration de ces puces électroniques va maintenant être décrit en regard du procédé de la figure 9.

Dans le procédé de la figure 9, des mesures sont d'abord relevées sur une puce électronique de référence puis utilisées pour calibrer une puce électronique. Ici, la puce de référence comporte les mêmes transducteurs que ceux de la puce à calibrer. Par exemple, la puce de référence est identique à la puce à calibrer, c'est-à-dire qu'elles ont été obtenues par le même procédé de fabrication. Bien que le même procédé de fabrication ait été utilisé, les circuits 14 de lecture de ces puces peuvent ne pas présenter exactement les mêmes caractéristiques électriques à cause des imprécisions de fabrication.

Initialement, lors d'une étape 130, au moins l'un des pixels $P_{nij}$ de la puce de référence est mis directement en contact avec un premier élément ayant des premières caractéristiques thermiques. Ici, ce premier élément est choisi pour correspondre à l'élément ayant la plus mauvaise conductivité thermique susceptible d'être rencontrée lors de l'utilisation du détecteur 2. Par exemple, dans ce cas, le premier élément est l'air ambiant.

Ensuite, lors d'une étape 132, la variation $\Delta T_{1réf}$ de température mesurée par ce pixel $P_{nij}$ est lue par le circuit 14 de la puce de référence. Le procédé de lecture d'une variation $\Delta T$ de température à l'aide d'un pixel est décrit plus en détail en regard de la figure 11.

En parallèle, lors d'une étape 134, le pixel $P_{cij}$ de la puce de référence est aussi mis en contact avec le même premier élément, c'est-à-dire l'air. Lors d'une étape 136, le circuit 14 mesure alors la variation $\Delta T_{créf}$ de température correspondante.

Puisque lors des étapes 132 et 136, les mesures sont réalisées avec l'air ambiant, on parle de mesure « à vide ».

Ensuite, lors d'une étape 138, au moins l'un des pixels $P_{nij}$ de la puce de référence est mis en contact avec un second élément ayant des caractéristiques thermiques différentes du premier élément. Ici, ce second élément est choisi pour correspondre à l'élément ayant la meilleure conductivité thermique susceptible d'être rencontré lors d'un usage normal du détecteur 2. Etant donné que la peau et l'épiderme sont essentiellement constitués d'eau, le second élément est ici approximé par de l'eau.

Lors d'une étape 140, le circuit 14 de la puce de référence est utilisé pour relever la variation $\Delta T_{2réf}$ de température mesurée par ce pixel $P_{cij}$.

Lors d'une étape 142, les variations $\Delta T_{1réf}$, $\Delta T_{créf}$ et $\Delta T_{2réf}$ sont enregistrées dans la mémoire 30 de tout détecteur utilisant une puce fabriquée par le même procédé de fabrication que celui de la puce de référence. Par exemple, ces variations sont enregistrée dans le code du sous-module 28 de calibration.

Généralement, la variation $\Delta T_{créf}$ correspond à la variation de température qui serait mesurée si le pixel $P_{nij}$ était mis en contact avec un objet dont les caractéristiques thermiques sont situées entre celles des premier et second éléments. Les variations $\Delta T_{1réf}$, $\Delta T_{créf}$ et $\Delta T_{2réf}$ mesurées lors des étapes 130 à 140 avec la puce de référence peuvent donc être représentées sur le même graphe (figure 10) en fonction des caractéristiques thermiques de l'objet mis en contact avec le pixel $P_{nij}$. Ici, on suppose que les variations de température mesurées varient linéairement en fonction des caractéristiques thermiques de l'objet.

Lors d'une seconde phase, la puce à calibrer est calibrée en utilisant les variations $\Delta T_{1réf}$, $\Delta T_{créf}$ et $\Delta T_{2réf}$ enregistrée dans la mémoire 30 du détecteur 2 incorporant cette puce.

Plus précisément, lors d'une étape 144, au moins un des pixels $P_{nij}$ et le pixel $P_{cij}$ de la seconde puce est mis en contact avec le même premier élément que lors de l'étape 130, c'est-à-dire l'air.

Lors d'une étape 146, le circuit 14 de la puce à calibrer relève les variations $\Delta T_1$ et $\Delta T_c$ de température mesurées, respectivement, par les pixels $P_{nij}$ et $P_{cij}$. Une mesure à vide est donc réalisée lors de l'étape 146.

Ensuite, lors d'une étape 154, la variation $\Delta T_2$ de température qui serait mesurée par le pixel $P_{nij}$ de la puce à calibrer si celui-ci était mis en contact avec le second élément, c'est-à-dire avec l'eau, est déterminée sans que ce pixel soit réellement mis en contact avec l'eau. Plus précisément, la variation $\Delta T_2$ est déterminée à partir d'une relation prédéterminée qui la relie aux variations mesurées $\Delta T_1$ et $\Delta T_c$. Cette relation est déterminée à partir des variations $\Delta T_{1ref}$, $\Delta T_{2réf}$ et $\Delta T_{créf}$.

Pour simplifier les explications, on suppose ici que les variations $\Delta T$ mesurées varient linéairement en fonction de la caractéristique thermique de l'objet appliqué sur la face 4. Il existe donc un rapport $\alpha$ de proportionnalité entre, par exemple, les écarts $\Delta T_{2réf}$- $\Delta T_{1,\ réf}$ et $\Delta T_{1réf}$- $\Delta T_{créf}$. On suppose que ce rapport $\alpha$ est conservée d'une puce à une autre. Cette hypothèse est raisonnable puisque les caractéristiques thermiques des pixels sont plus stables d'une puce à une autre que les caractéristiques électriques des circuits 14. Dans ces conditions, la relation prédéterminée qui relie la variation $\Delta T_2$ aux variations mesurées $\Delta T_1$ et $\Delta T_c$ est, par exemple, la suivante :

$$\Delta T_2 = \Delta T_1 - (\Delta T_{2\,réf} - \Delta T_{1\,réf})\,(\Delta T_1 - \Delta T_c)/(\Delta T_{1réf} - \Delta T_{créf})$$

Lors d'une étape 156, le sous-module 28 utilise les variations $\Delta T_1$ et $\Delta T_2$ pour régler la puce, c'est-à-dire déterminer au moins un paramètre de réglage de la puce. Chaque paramètre de réglage de la puce modifie le fonctionnement ou les performances de la puce lorsqu'il est modifié. Ici, le réglage consiste à ajuster la sensibilité du circuit 14. Plus précisément, les paramètres de réglage sont deux bornes $B_{min}$ et $B_{max}$ du convertisseur 86. Ces bornes sont calculées à partir des variations $\Delta T_1$ et $\Delta T_2$ pour maximiser la sensibilité du circuit 14. Par exemple, la borne $B_{min}$ correspond à la variation $\Delta T_2$ et la borne $B_{max}$ correspond à la variation $\Delta T_1$.Ce calcul est par exemple effectué par le sous-module 28 puis les valeurs des bornes $B_{min}$ et $B_{max}$ sont enregistrées dans la mémoire 88.

Les étapes 154 et 156 forment une phase de calibration de la puce électronique. Cette phase de calibration est systématiquement déclenchée après chaque mise sous tension de la puce suivie d'une utilisation de la puce pour relever un motif thermique.

De préférence, le procédé de calibration est exécuté par le sous-module 28 lors de chaque mise sous tension de la puce électronique 3. Ainsi, il n'est pas nécessaire de stocker sur la puce électronique 3 elle-même les variations $\Delta T_{1ref}$, $\Delta T_{2réf}$ et $\Delta t_{créf}$ ou le rapport $\alpha$.

Le fonctionnement du détecteur 2 et plus précisément du circuit 14 va maintenant être décrit en regard du procédé de la figure 11.

Pour relever un motif thermique, les mesures de chaque pixel $P_{nij}$ de la puce 3 sont acquises. Pour cela, initialement, lors d'une étape 160, le transistor 80 est commandé pour raccorder l'électrode 42 au potentiel d'initialisation $V_r$. Typiquement, le potentiel d'initialisation est bas si la variation de température conduit à augmenter la tension et au contraire haut si la variation de température à mesurer conduit à diminuer cette tension.

Ensuite, lors d'une étape 162, le circuit 14 fait circuler un courant dans la résistance chauffante 46 pour chauffer le pixel $P_{nij}$. Éventuellement, lors de l'étape 162, le circuit 14 commande également le passage d'un courant entre les bornes des résistances chauffantes de tous les pixels immédiatement adjacents aux pixels utilisés pour réaliser la mesure. Ceci permet d'augmenter la puissance calorifique délivrée.

Ensuite, lors d'une étape 164, le transistor 80 est commandé pour devenir non passant. La tension sur l'électrode 42 est donc flottante et suit à partir de cet instant la variation de température. L'ouverture du transistor 80 est appliquée uniquement après la mise sous- tension de la résistance chauffante 46 de sorte que les perturbations liées à l'allumage de la résistance chauffante n'ont pas d'incidence sur le fonctionnement ultérieur du pixel $P_{nij}$.

Lors d'une étape 166, le transistor 82 est commandé pour sélectionner le pixel $P_{nij}$. A partir de ce moment, l'électrode 42 est électriquement raccordé à l'amplificateur 84 puis au convertisseur analogique-numérique 86. La différence de potentiels entre les électrodes 40 et 42 est alors échantillonnée puis transmise au calculateur 20.

Enfin, lors d'une étape 168, après la lecture de la différence de potentiels entre les électrodes 40 et 42, la résistance chauffante 46 est arrêtée.

Les étapes 160 à 168 sont réitérées pour tous les pixels $P_{nij}$ de la puce 3. Cette itération pour tous les pixels de la puce permet de construire une carte du motif thermique. Typiquement, plus de 100 ou 1000 cartes sont construites par seconde.

Lors d'une étape 172, les différentes cartes construites sont traitées par l'unité 26 pour révéler le motif thermique et, en réponse, déclencher certaines actions.

De nombreux autres modes de réalisation sont possibles. Par exemple, les électrodes supérieures ou inférieures peuvent être réalisées dans d'autres matériaux tels que le tungstène tel que le titane.

L'électrode supérieure n'est pas nécessairement commune à l'ensemble des pixels.

La couche protectrice peut être omise ou réalisée dans d'autres matériaux que le nitrure d'aluminium. Lorsque la couche protectrice est omise, l'objet qui porte le motif thermique à détecter vient directement en appui sur l'électrode supérieure. Lorsque la couche protectrice est réalisée dans un autre matériau, elle peut être réalisée en nitrure de silicium.

La couche en matériau pyroélectrique n'est pas nécessairement uniquement réalisée en nitrure d'aluminium.

En effet, la couche en matériau pyroélectrique peut être un mélange de nitrure d'aluminium et d'un ou plusieurs autres matériaux ne gênant pas la circulation des charges entre les électrodes. La proportion de nitrure d'aluminium dans ce mélange est alors d'au moins 10, 25, 50 ou 75% en masse. Les autres matériaux peuvent être ou non eux-mêmes des matériaux pyroélectriques.

Dans tous les modes de réalisation décrit ici, le nitrure d'aluminium peut être remplacé par un ou un mélange de nitrures choisis dans le groupe composé des nitrures III-V. En particulier, la couche en matériau pyroélectrique peut être réalisée à base d'un nitrure ou d'un mélange de nitrures choisis dans le groupe composé du nitrure d'aluminium, du nitrure de gallium et du nitrure d'indium.

D'autres couches peuvent être introduites en plus de la couche pyroélectrique à base de nitrure III-V entre les électrodes inférieure et supérieure. Pour que le transducteur fonctionne, ce ou chacune de ces couches supplémentaires est réalisée dans un matériau qui ne gêne pas la circulation des charges entres ces électrodes. Ce ou ces couches supplémentaires peuvent être réalisées dans d'autres matériaux pyroélectriques. Par exemple, entre les électrodes, au moins une couche en nitrure d'aluminium est empilée sur ou sous une autre couche en PZT (« Lead zirconate titanate » en anglais) ou en carbone.

La résistance chauffante peut être formée dans la même couche de matériau que celle gravée pour former l'électrode supérieure.

La résistivité de la résistance 46 peut être augmentée en amincissant l'épaisseur de la bande résistive.

Dans d'autres modes de réalisation, la résistance chauffante peut être commune à plusieurs pixels. Dans ce cas, par exemple, la bande résistive traverse plusieurs pixels avant de rejoindre ses extrémités 64 et 66.

Dans un autre mode de réalisation, la résistance chauffante ne sépare pas l'électrode en plusieurs plaques. Par exemple, la résistance chauffante peut être conformée pour s'étendre le long de la périphérie extérieure de l'électrode. Par exemple, la résistance chauffante s'étend le long de plus de 80 % de la périphérie de cette électrode.

La résistance chauffante peut également être enfouie sous l'électrode inférieure et non pas nécessairement réalisée au même niveau que celle-ci.

Le sous-module 28 de calibration peut également être implanté dans la puce électronique. De préférence, il est alors implémenter sous forme matérielle (ou « hardware » en anglais) dans le substrat 16.

Les valeurs des variations $\Delta T_1$ et $\Delta T_2$ peuvent aussi être utilisées par d'autres applications que le réglage de la sensibilité du convertisseur analogique-numérique. Toute étape consistant à utiliser la variation $\Delta T_2$ déterminée sans mise en contact avec le second élément est ici considérée comme étant une étape de calibration. Par exemple, ces variations $\Delta T_1$ et $\Delta T_2$ sont utilisées pour régler un amplificateur analogique qui n'amplifie le signal mesuré que si celui-ci est contenu entre des bornes $B_{minA}$ et $B_{maxA}$. Par exemple, la borne $B_{minA}$ est réglée en fonction de la variation $\Delta T_1$ et le gain de l'amplificateur est réglé en fonction des variations $\Delta T_1$ et $\Delta T_2$.

Plusieurs pixels de calibration $P_{cij}$ peuvent être utilisés. Ces pixels de calibration n'ont pas tous forcément les mêmes caractéristiques thermiques. En particulier, si la relation entre $\Delta T_c$, $\Delta T_1$ et $\Delta T_2$ n'est pas linéaire, alors plusieurs pixels de calibration ayant des caractéristiques thermiques différentes sont utilisés pour déterminer $\Delta T_2$ sans avoir à appliquer le second élément sur la puce.

Si plusieurs pixels de calibration ayant des caractéristiques thermiques différents sont utilisés, il n'est également pas nécessaire de mesurer la différence de potentiels à vide d'un pixel normal $P_{nij}$ pour déterminer $\Delta T_1$. Par exemple, si la relation entre les variations de températures et les variations de la caractéristique thermique de l'objet est linéaire, alors deux pixels de calibration ayant des caractéristiques thermiques différentes sont suffisants pour déterminer $\Delta T_2$ sans qu'aucune mesure soit réalisée avec le pixel normal $P_{nij}$.

Les rôles des pixels normaux $P_{nij}$ et de calibration $P_{cij}$ peuvent être inversés dans le procédé de calibration décrit précédemment.

Il est également possible de prévoir un pixel de calibration dont la caractéristique thermique est modifiée de manière à mesurer une variation de température correspondant au contact avec le second élément lorsqu'il est en contact avec le premier élément. Par exemple, la couche supplémentaire 70 est remplacée par une capsule contenant de l'eau.

D'autres modes de réalisation du pixel de calibration $P_{cij}$ sont possibles. Par exemple, une masse métallique importante est disposée à proximité de la résistance chauffante pour agir comme un radiateur dissipant la chaleur et empêchant ce pixel de chauffer trop rapidement.

Dans un autre mode de réalisation, la résistance chauffante du pixel $P_{cij}$ est diminuée par rapport à celle d'un pixel normal.

Le circuit de lecture des transducteurs n'est pas nécessairement commun à l'ensemble des pixels du détecteur de motif thermique. Par exemple, en variante, un premier circuit de lecture est prévu pour la lecture des pixels normaux et un second circuit de lecture indépendant est prévu pour la lecture des pixels de calibrations.

L'utilisation d'une couche à base de nitrure III-V, et en particulier à base de nitrure d'aluminium, comme matériau pyroélectrique s'applique aussi bien à des pixels passifs de détection qu'à des pixels actifs de détection. Les pixels passifs de détection sont des pixels dépourvus de résistance chauffante. Dans ces conditions, le pixel ne chauffe pas l'objet pour révéler le motif thermique mais exploite seulement la température de l'objet.

L'objet en contact avec la face sensible peut être immobile ou au contraire se déplacer sur cette face sensible. Par exemple, le doigt peut balayer la face sensible. Un tel balayage permet de relever un motif thermique qui s'étend sur une surface strictement supérieure à la surface de la face sensible. Un tel procédé est décrit dans la demande de brevet US 6 289 114.

Une même puce électronique peut comporter une ou plusieurs matrices de pixels et un ou plusieurs circuits de lecture gravés ou déposés sur le substrat de cette puce.

De nombreuses autres applications du détecteur 2 sont possibles. En particulier, le détecteur 2 permet de détecter le motif thermique non seulement d'une empreinte digitale mais de tout autre objet présentant un motif thermique tel qu'un billet de banque ou un tissu.

Par exemple, il n'est pas nécessaire dans toutes les applications qu'il y ait un contact direct entre la face sensible et l'objet. Ainsi, la puce électronique décrite ici peut aussi être utilisée en tant que caméra thermique.

Il n'est pas non plus nécessaire que l'objet présente des crêtes et des creux pour présenter un motif thermique. En fait, la surface de l'objet peut être uniformément plane. Dans ce cas, le motif thermique correspond à des différences locales de caractéristiques thermiques détectables par les pixels de la puce. Par exemple, l'objet peut être un doigt dont l'empreinte digitale est totalement usée. En effet, même dans ce cas où l'épiderme ne présente plus de creux et de crête, cet épiderme présente encore des différences de caractéristiques locales décelables par la puce électronique comme expliqué dans la demande de brevet EP 0 825 831.

L'oxydation de la face supérieure de l'électrode supérieure peut être mise en oeuvre indépendamment des autres caractéristiques du pixel de détection décrit ci-dessus. Par exemple, l'électrode supérieure oxydée peut être mise en oeuvre avec d'autres couches en matériau pyroélectrique que celles réalisées à base de nitrure d'aluminium ou de nitrure III-V.

De façon similaire, les différents modes de réalisation de la résistance chauffante décrits ici peuvent être mis en oeuvre indépendamment des autres caractéristiques du transducteur. Par exemple, la réalisation de la résistance chauffante par une bande résistive qui divise l'électrode en plusieurs plaques peut être mise en oeuvre indépendamment des autres caractéristiques du pixel de détection décrit ci-dessus. En particulier, cette conformation de l'électrode peut être mise en oeuvre quel que soit le matériau pyroélectrique utilisé.

Enfin, les différentes caractéristiques du détecteur nécessaire pour mettre en oeuvre le procédé de calibration décrit ici peuvent être mises en oeuvre indépendamment des autres caractéristiques de ce détecteur et en particulier indépendamment du matériau pyroélectrique utilisé.

**Revendications**

**1.** Procédé de calibration d'une puce électronique pour la détection d'un motif thermique, comportant :

- la mise en contact (144) d'un transducteur de variation temporelle de température, dit normal, de la puce à calibrer avec un premier élément ayant une première caractéristique thermique et la mesure (146) d'une variation $\Delta T_1$ correspondante de température avec le transducteur normal,

**caractérisé en ce que** procédé comporte au moins :

- la mise en contact (144) d'un transducteur de variation temporelle de température, dit de calibration, de la puce à calibrer avec le premier élément et la mesure d'une variation $\Delta T_c$ correspondante de température avec ce transducteur de calibration, le transducteur thermique de calibration ayant des caractéristiques thermiques différentes de celles du transducteur normal de manière à mesurer une variation $\Delta T_c$ différente de la variation $\Delta T_1$, et
- la calibration (154, 156) de la puce à calibrer à partir des variations mesurées $\Delta T_1$ et $\Delta t_c$, cette calibration comprenant :
- la détermination (154) d'une variation $\Delta T_2$ de température correspondant à la variation de température qui serait mesurée par le transducteur normal de la puce à calibrer si celui-ci était mis en contact avec un second élément ayant une seconde caractéristique thermique, à partir des variations mesurées $\Delta T_1$ et $\Delta T_c$ et d'une relation prédéterminée entre ces variations $\Delta T_1$, $\Delta T_c$ et $\Delta T_2$, et
- le réglage (156) de la puce à calibrer à partir de la variation déterminée $\Delta T_2$.

**2.** Procédé selon la revendication 1, dans lequel le procédé comprend :

- la mise en contact (130, 134) d'un transducteur normal et d'un transducteur de calibration d'une puce de référence avec le premier élément et la mesure (132, 136) de variations $\Delta T_{1ref}$ et $\Delta T_{créf}$ correspondantes de température, respectivement, avec ce transducteur normal et ce transducteur de calibration, le transducteur normal et le transducteur de calibration de la puce de référence étant identiques, respectivement, au transducteur normal et au transducteur de calibration de la puce à calibrer,

- au moins la mise en contact (138) du transducteur normal de la puce de référence avec le second élément de référence et la mesure (140) d'une variation $\Delta T_{2ref}$ correspondante de température avec ce transducteur, et
- la détermination (154) de la relation entre $\Delta T_1$, $\Delta T_c$ et $\Delta T_2$ à partir des variations $\Delta T_{1réf}$, $\Delta T_{2réf}$, et $\Delta T_{créf}$ mesurées par la puce de référence.

3. Procédé selon l'une quelconque des revendications précédentes, dans lequel la calibration est exécutée après chaque mise sous tension de la puce à calibrer suivie d'une utilisation pour détecter un motif thermique, cette calibration comprenant la détermination (156) d'au moins un paramètre de réglage de la puce à calibrer à partir des variations $\Delta T_1$ et $\Delta T_c$ et l'enregistrement de ce paramètre déterminé uniquement dans une mémoire volatile de la puce à calibrer.

4. Procédé selon l'une quelconque des revendications précédentes, dans lequel la calibration comprend le réglage de la sensibilité de la puce à calibrer en fonction des variations mesurées $\Delta T_1$ et $\Delta T_c$.

5. Procédé selon l'une quelconque des revendications précédentes, dans lequel lors de chaque mise en contact d'un transducteur avec l'un des éléments, le procédé comprend l'action de chauffer (162) l'élément en contact avec le transducteur et la mesure (166) de l'accroissement de la température de cet élément de référence chauffé à l'aide de ce transducteur.

6. Procédé selon l'une quelconque des revendications précédentes, dans lequel le premier élément est l'air ambiant et/ou le second élément est de l'eau.

7. Procédé selon l'une quelconque des revendications précédentes, dans lequel le transducteur normal et le transducteur de calibration sont des transducteurs pyroélectriques présentant chacun au moins une couche (44) de matériau pyroélectrique identique.

8. Détecteur de motif thermique contenant une puce électronique pour la détection d'un motif thermique, cette puce comportant :

- des transducteurs ($P_{nij}$, $P_{cij}$) de variation temporelle de température, dont au moins un transducteur de variation temporelle de température, dit normal ($P_{nij}$), et au moins un transducteur de variation temporelle de température, dit de calibration ($P_{cij}$), chaque transducteur de calibration ayant des caractéristiques thermiques différentes du ou des transducteurs normaux de manière à mesurer une variation $\Delta T_c$ de température différente d'une variation $\Delta T_1$ mesurée par le ou les transducteurs normaux lorsque ces transducteurs normaux et de calibration sont mis en contact avec le même élément, et
- au moins un circuit (14) de lecture apte à relever individuellement la variation de température mesurée par ces transducteurs,

**caractérisée en ce que** le détecteur comporte un sous-module (28) de calibration apte à calibrer la puce électronique à partir des variations $\Delta T_1$ et $\Delta T_c$ mesurées, respectivement, avec le transducteur normal et le transducteur de calibration lorsque ces transducteurs sont mis en contact avec le même élément, cette calibration comprenant :

- des moyens pour la détermination d'une variation $\Delta T_2$ de température correspondant à la variation de température qui serait mesurée par le transducteur normal de la puce à calibrer si celui-ci était mis en contact avec un second élément ayant une seconde caractéristique thermique, à partir des variations mesurées $\Delta T_1$ et $\Delta T_c$ et d'une relation prédéterminée entre ces variations $\Delta T_1$, $\Delta T_c$ et $\Delta T_2$, et
- des moyens pour le réglage de la puce à calibrer à partir de la variation déterminée $\Delta T_2$.

9. Détecteur selon la revendication 8, dans laquelle le circuit de lecture est commun à tous les transducteurs de la puce électronique, ce circuit de lecture étant apte à être raccordé en alternance à chaque transducteur.

10. Détecteur selon la revendication 8 ou 9, dans laquelle le transducteur normal et le transducteur de calibration sont des transducteurs pyroélectriques présentant chacun au moins une couche (44) de matériau pyroélectrique identique.

11. Détecteur selon l'une quelconque des revendications 8 à 10, dans lequel :

- la puce électronique (3) comprend un convertisseur analogique-numérique (86) des mesures réalisées par les transducteurs et une mémoire volatile (88) raccordée à ce convertisseur analogique-numérique, cette mémoire volatile étant apte à contenir des bornes $B_{min}$ et $B_{max}$ définissant l'étendu de la plage d'échantillonnage du convertisseur analogique numérique, et
- le sous-module (28) de calibration est apte à déterminer automatiquement les valeurs de bornes $B_{min}$ et $B_{max}$ à partir des variations mesurées $\Delta T_1$ et $\Delta T_c$.

**Patentansprüche**

1. Verfahren zum Kalibrieren eines elektronischen Chips für das Erfassen eines Wärmemusters, das Folgendes aufweist:

- das Inberührungbringen (144) eines Messwandlers der zeitlichen Temperaturvariation, der normal genannt wird, des zu kalibrierenden Chips mit einem ersten Element, das ein erstes Wärmemerkmal hat, und Messen (146) einer entsprechenden Wärmevariation $\Delta T_1$, mit dem normalen Messwandler,

**dadurch gekennzeichnet, dass** das Verfahren mindestens Folgendes aufweist

- das Inberührungbringen (144) eines Messwandlers der zeitlichen Temperaturvariation, Kalibrierungsmesswandler genannt, des zu kalibrierenden Chips mit dem ersten Element und Messung einer entsprechenden Wärmevariation $\Delta T_c$ mit diesem Kalibrierungsmesswandler, wobei der Kalibrierungswärmemesswandler Wärmemerkmale hat, die von denen des normalen Messwandlers derart unterschiedlich sind, dass eine Variation $\Delta T_c$ gemessen wird, die von der Variation $\Delta T_1$ unterschiedlich ist, und
- das Kalibrieren (154, 156) des zu kalibrierenden Chips ausgehend von den gemessenen Variationen $\Delta T_1$ und $\Delta T_c$, wobei dieses Kalibrieren Folgendes aufweist:
- das Bestimmen (154) einer Wärmevariation $\Delta T_2$, die der Temperaturvariation entspricht, die von dem normalen Messwandler des zu kalibrierenden Chips gemessen würde, wenn dieser mit einem zweiten Element, das ein zweites Wärmemerkmal hat, in Berührung gebracht würde, ausgehend von den gemessenen Variationen $\Delta T_1$ und $\Delta T_c$, und einer vorbestimmten Beziehung zwischen diesen Variationen $\Delta T_1$, $\Delta T_c$ und $\Delta T_2$, und
- das Einstellen (156) des zu kalibrierenden Chips ausgehend von der bestimmten Variation $\Delta T_2$.

2. Verfahren nach Anspruch 1, bei dem das Verfahren Folgendes aufweist:

- das Inberührungbringen (130, 134) eines normalen Messwandlers und eines Kalibrierungsmesswandlers eines Bezugschips mit dem ersten Element und die Messung (132, 136) jeweils entsprechender Temperaturvariationen $\Delta T_{1ref}$ und $\Delta T_{cref}$ mit diesem normalen Messwandler und diesem Kalibrierungsmesswandler, wobei der normale Messwandler und der Kalibrierungsmesswandler des Bezugschips jeweils mit dem normalen Messwandler und dem Kalibrierungsmesswandler des zu kalibrierenden Chips identisch sind,
- mindestens das Inberührungbringen (138) des normalen Messwandlers des Bezugschips mit dem zweiten Bezugselement und die Messung (140) einer entsprechenden Temperaturvariation $\Delta T_{2ref}$ mit diesem Messwandler, und
- das Bestimmen (154) der Beziehung zwischen $\Delta T_1$, $\Delta T_c$ und $\Delta T_2$ ausgehend von den von dem Bezugschip gemessenen Variationen $\Delta T_{1ref}$, $\Delta T_{2ref}$ und $\Delta T_{cref}$.

3. Verfahren nach einem der vorhergehenden Ansprüche, bei dem das Kalibrieren nach jedem Unterspannungsetzen des zu kalibrierenden Chips ausgeführt wird, gefolgt von einer Verwendung, um ein Wärmemuster zu erfassen, wobei dieses Kalibrieren das Bestimmen (156) mindestens eines Einstellparameters des zu kalibrierenden Chips ausgehend von den Variationen $\Delta T_1$ und $\Delta T_c$ aufweist und das Speichern nur dieses bestimmten Parameters in einem flüchtigen Speicher des zu kalibrierenden Chips.

4. Verfahren nach einem der vorhergehenden Ansprüche, bei dem das Kalibrieren das Einstellen der Empfindlichkeit des zu kalibrierenden Chips in Abhängigkeit von den gemessenen Variationen $\Delta T_1$ und $\Delta T_c$ aufweist.

5. Verfahren nach einem der vorhergehenden Ansprüche, bei dem bei jedem Inberührungbringen eines Messwandlers mit einem der Elemente das Verfahren die Aktion des Erwärmens (162) des Elements in Berührung mit dem Messwandler und des Messens (166) des Zunehmens der Temperatur dieses Bezugselements, das mit Hilfe dieses Messwandlers erwärmt wird, aufweist.

6. Verfahren nach einem der vorhergehenden Ansprüche, bei dem das erste Element die Umgebungsluft und/oder das zweite Element Wasser ist.

7. Verfahren nach einem der vorhergehenden Ansprüche, bei dem der normale Messwandler und der Kalibrierungsmesswandler pyroelektrische Messwandlers sind, die jeweils mindestens eine Schicht (44) aus identischem pyroelektrischem Material aufweisen.

8. Wärmemusterdetektor, der einen elektronischen Chip zum Erfassen eines Wärmemusters aufweist, wobei dieser Chip Folgendes aufweist:

   - Messwandler ($P_{nij}$, $P_{cij}$) der zeitlichen Temperaturvariation, darunter mindestens ein Messwandler der zeitlichen Temperaturvariation, normaler Messwandler ($P_{nij}$) genannt, und mindestens ein Messwandler der zeitlichen Temperaturvariation, Kalibrierungsmesswandler ($P_{cij}$) genannt, wobei jeder Kalibrierungsmesswandler Wärmemerkmale hat, die von dem oder den normalen Messwandlern derart unterschiedlich sind, dass eine Temperaturvariation $\Delta T_c$, die von einer Variation $\Delta T_1$ unterschiedlich ist, die von dem oder den normalen Messwandlern gemessen wird, wenn diese normalen Messwandler und Kalibrierungsmesswandler mit demselben Element in Berührung gebracht werden, gemessen wird, und
   - mindestens eine Leseschaltung (14), die geeignet ist, um einzeln die von diesen Messwandlern gemessene Temperaturvariation zu lesen,

   **dadurch gekennzeichnet, dass** der Detektor ein Kalibrierungsuntermodul (28) aufweist, das geeignet ist, um den elektronischen Chip ausgehend von den jeweils mit dem normalen Messwandler und dem Kalibrierungsmesswandler gemessenen Variationen $\Delta T_1$ und $\Delta T_c$ zu kalibrieren, wenn diese Messwandler mit demselben Element in Berührung gebracht werden, wobei dieses Kalibrieren Folgendes aufweist:

   - Mittel zum Bestimmen einer Temperaturvariation $\Delta T_2$, die der Temperaturvariation entspricht, die von dem normalen Messwandler des zu kalibrierenden Chips gemessen würde, wenn dieser mit einem zweiten Element, das ein zweites Wärmemerkmal hat, in Berührung gebracht würde, ausgehend von den gemessenen Variationen $\Delta T_1$ und $\Delta T_c$ und einer vorbestimmten Beziehung zwischen diesen Variationen $\Delta T_1$, $\Delta T_c$ und $\Delta T_2$, und
   - Mittel zum Einstellen des zu kalibrierenden Chips ausgehend von der bestimmten Variation $\Delta T_2$.

9. Detektor nach Anspruch 8, bei dem die Leseschaltung für alle Messwandler des elektronischen Chips gemeinsam ist, wobei diese Leseschaltung geeignet ist, abwechselnd an jeden Messwandler angeschlossen zu werden.

10. Detektor nach Anspruch 8 oder 9, bei dem der normale Messwandler und der Kalibrierungsmesswandler pyroelektrische Messwandler sind, die jeweils mindestens eine Schicht (44) aus identischem pyroelektrischem Material aufweisen.

11. Detektor nach einem der Ansprüche 8 bis 10, bei dem:

   - der elektronische Chip (3) einen Analog-DigitalWandler (86) der von den Messwandlern ausgeführten Messungen und einen flüchtigen Speicher (88), der an den diesen Analog-DigitalWandler angeschlossen ist, aufweist, wobei dieser flüchtige Speicher geeignet ist, um Klemmen $B_{min}$ und $B_{max}$ zu enthalten, die den Stichprobenbereich des Analog-Digital-Wandlers definieren, und
   - das Kalibrierungsuntermodul (28) geeignet ist, automatisch die Werte der Klemmen $B_{min}$ und $B_{max}$ ausgehend von den gemessenen Variationen $\Delta T_1$ und $\Delta T_c$ zu bestimmen.

**Claims**

1. A method for calibrating an electronic chip for detection of a heat pattern, said method comprising the following steps:

   - contacting (144) a 'normal' transducer of the chip to be calibrated with a first element having a first thermal characteristic, the normal transducer transducing time-related temperature variations, and measuring (146) a corresponding temperature variation $\Delta T_1$ with the normal transducer,

**characterised in that** the method comprises at least:

- contacting (144) a 'calibration' transducer of the chip to be calibrated with the first element, the calibration transducer transducing time-related temperature variations, and measuring a corresponding temperature variation $\Delta T_c$ with this calibration transducer, the thermal calibration transducer having thermal characteristics different from those of the normal transducer so as to measure a temperature variation $\Delta T_c$ that differs from the variation $\Delta T_1$, and
- calibrating (154, 156) the chip to be calibrated on the basis of the measured variations $\Delta T_1$ and $\Delta T_c$, this calibration process comprising the following steps:
- determining (154) a temperature variation $\Delta T_2$ corresponding to the temperature variation that would be measured by the normal transducer of the chip to be calibrated if said chip were to be contacted with a second element having a second thermal characteristic, wherein this determination process is carried out on the basis of the measured variations $\Delta T_1$ and $\Delta T_c$ and on the basis of a predetermined relationship between these variations $\Delta T_1$, $\Delta T_c$ and $\Delta T_2$, and
- setting (156) the chip to be calibrated on the basis of the determined variation $\Delta T_2$.

2. The method according to Claim 1, wherein the method comprises the following steps:

- contacting (130, 134) a normal transducer and a calibration transducer of a reference chip with the first element and measuring (132, 136) corresponding temperature variations $\Delta T_{1ref}$ and $\Delta T_{cref}$ respectively with this normal transducer and this calibration transducer, the normal transducer and the calibration transducer of the reference chip being identical, respectively, to the normal transducer and to the calibration transducer of the chip to be calibrated,
- at least contacting (138) the normal transducer of the reference chip with the second reference element and measuring (140) a corresponding temperature variation $\Delta T_{2ref}$ with this transducer, and
- determining (154) a relationship between $\Delta T_1$, $\Delta T_c$ and $\Delta T_2$ on the basis of the variations $\Delta T_{1ref}$, $\Delta T_{2ref}$, and $\Delta T_{cref}$ measured by the reference chip.

3. The method according to any one of the preceding claims, wherein the calibration is performed each time the chip to be calibrated is powered on and then used for detecting a heat pattern, this calibration comprising the step of determining (156) at least one parameter for setting the chip to be calibrated on the basis of the variations $\Delta T_1$ and $\Delta T_c$, and recording this determined parameter only in a volatile memory of the chip to be calibrated.

4. The method according to any one of the preceding claims, wherein the calibration comprises the step of setting the sensitivity of the chip to be calibrated as a function of the measured variations $\Delta T_1$ and $\Delta T_c$.

5. The method according to any one of the preceding claims, wherein, each time a transducer is contacted with one of the elements, the method comprises the action of heating (162) the element in contact with the transducer and of measuring (166) the rise in temperature of this heated reference element using this transducer.

6. The method according to any one of the preceding claims, wherein the first element is ambient air and/or the second element is water.

7. The method according to any one of the preceding claims, wherein the normal transducer and the calibration transducer are pyroelectric transducers, each having at least one layer (44) of identical pyroelectric material.

8. A detector for detecting a heat pattern, said detector containing an electronic chip, this electronic chip comprising:

- transducers ($P_{nij}$, $P_{cij}$) for transducing time-related temperature variations, including at least one transducer for transducing time-related temperature variations referred to as a 'normal' transducer ($P_{nij}$), and at least one transducer for transducing time-related temperature variations referred to as a 'calibration' transducer ($P_{cij}$), each calibration transducer having thermal characteristics that differ from those of the normal transducer(s) so as to measure a temperature variation $\Delta T_c$ that differs from a temperature variation $\Delta T_1$ measured by the normal transducer(s) when these normal and calibration transducers are contacted with the same element, and
- at least one read circuit (14) capable of individually reading the temperature variation measured by these transducers,

**characterised in that** the detector comprises a calibration sub-module (28) capable of calibrating the electronic chip on the basis of the variations $\Delta T_1$ and $\Delta T_c$ measured, respectively, with the normal transducer and the calibration transducer when these transducers are contacted with the same element, this calibration process comprising:

- means for determining a temperature variation $\Delta T_2$ corresponding to the temperature variation that would be measured by the normal transducer of the chip to be calibrated if said chip were to be contacted with a second element having a second thermal characteristic, wherein this determination process is carried out on the basis of the measured variations $\Delta T_1$ and $\Delta T_c$ and on the basis of a predetermined relationship between these variations $\Delta T_1$, $\Delta T_c$ and $\Delta T_2$, and
- means for setting the chip to be calibrated on the basis of the determined variation $\Delta T_2$.

9. The detector according to Claim 8, wherein the read circuit is common to all the transducers of the electronic chip, this read circuit being able to be connected alternately to each transducer.

10. The detector according to Claim 8 or 9, wherein the normal transducer and the calibration transducer are pyroelectric transducers each having at least one layer (44) of identical pyroelectric material.

11. The detector according to any one of Claims 8 to 10, wherein:

- the electronic chip (3) comprises an analogue-digital converter (86) for converting measurements made by the transducers, and a volatile memory (88) connected to this analogue-digital converter, this volatile memory being capable of containing limits $B_{min}$ and $B_{max}$ defining the extent of the sampling range of the analogue-digital converter, and
- the calibration sub-module (28) is capable of automatically determining the values of the limits $B_{min}$ and $B_{max}$ on the basis of the measured variations $\Delta T_1$ and $\Delta T_c$.

Fig. 1

Fig. 3

Fig. 4

Fig. 7

Fig. 2

Fig. 8

Fig. 9

Fig. 5

Fig. 10

Fig. 6

Fig. 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1857797 A1
- US 7194113 B2
- US 7519205 B2
- WO 9926187 A1
- EP 0798546 A1
- US 7385381 B1
- US 2006115128 A
- US 6091837 A
- US 6289114 B
- EP 0825831 A

**Littérature non-brevet citée dans la description**

- **PETER BISHOP.** *Atmet's FingerChip(TM) Technology for Biometric Security,* 01 Novembre 2002, 1-23, http://www.biometrie-online.net/images/stories/dossiers/technique/empreintes/WhitePaper Finger-Chip.pdf